Europäisches Patentamt

European Patent Office

Office européen des brevets

(19)

(11) Veröffentlichungsnummer: **0 243 357**
**B1**

(12) **EUROPÄISCHE PATENTSCHRIFT**

(45) Veröffentlichungstag der Patentschrift:
19.07.89

(21) Anmeldenummer: 86900119.8

(22) Anmeldetag: 11.12.85

(86) Internationale Anmeldenummer:
PCT/EP 85/00694

(87) Internationale Veröffentlichungsnummer:
WO/8603791 (03.07.86 Gazette 86/14)

(51) Int. Cl.⁴: **C 25 D 13/22**, C 09 D 5/44

(54) VERFAHREN ZUR MEHRSCHICHTIGEN KATHODISCHEN NASS-IN-NASSLACKIERUNG VON METALLISCH LEITFÄHIGEN SUBSTRATEN.

(30) Priorität: 22.12.84 DE 3447257

(43) Veröffentlichungstag der Anmeldung:
04.11.87 Patentblatt 87/45

(45) Bekanntmachung des Hinweises auf die Patenterteilung: 19.07.89 Patentblatt 89/29

(84) Benannte Vertragsstaaten:
AT BE CH DE FR GB IT LI NL SE

(56) Entgegenhaltungen:
EP–A– 0 033 465
EP–A– 0 102 566
DE–A– 1 771 533
FR–A– 2 511 617
GB–A– 1 081 767

(73) Patentinhaber: BASF Lacke + Farben Aktiengesellschaft
Postfach 61 23
D-4400 Münster (DE)

(72) Erfinder: GEIST, Michael
Rubensstrasse 251
D-4400 Münster (DE)
Erfinder: OTT, Günther
Von Holte Strasse 101 a
D-4400 Münster (DE)
Erfinder: SCHÖN, Georg
Schillerstrasse 2
D-4416 Everswinkel (DE)
Erfinder: DOBBELSTEIN, Arnold
Emil-Nolde-Weg 95
D-4400 Münster (DE)
Erfinder: BATZILL, Wolfgang
Emil-Nolde-Weg 93
D-4400 Münster (DE)

**Beschreibung**

Gegenstand der vorliegenden Erfindung ist ein Verfahren zum Beschichten eines elektrisch leitenden Substrats, bei dem das Substrat in ein wäßriges Bad auf der Basis eines mindestens teilweise mit Säuren neutralisierten, kationischen, Amino- und/oder Hydroxylgruppen enthaltenden Kunstharzbindemittels, das eine Mischung von Vernetzungsmitteln sowie Pigmente, Füllstoffe, Korrosionsinhibitoren, Lackhilfsmittel, gegebenenfalls Katalysatoren und in einer Menge bis zu 15 Gewichts-%, bezogen auf das Gesamtgewicht des Überzugsmittels, organische Lösungsmittel enthält, eintaucht und als Kathode geschaltet wird, mittels Gleichstrom ein Film auf dem Substrat abgeschieden wird, das Substrat aus dem Bad entfernt wird und der Film durch Einbrennen gehärtet wird.

Aus der EP-A-102 566 ist ein Verfahren von kataphoretischem Beschichten eines elektrisch leitenden Substrats bekannt, bei dem die wäßrige abscheidbare Zusammensetzung ein mindestens teilweise mit Säuren neutralisiertes, kationisches, Amino- und/oder Hydroxylgruppen enthaltendes Kunstharzbindemittel, mit einem 1,2-Polyol und einem Monoalkohol blockiertes Polyisocyanat und einen Härtungskatalysator enthält. Das als Vernetzungsmittel dienende β-Hydroxyurethan führt zu einer niedrigen Härtungstemperatur.

Seit Beginn der Phase der Elektrotauchlackierung versucht man, den Gesamtlackierprozeß zu automatisieren. Bereits in den sechziger Jahren wurde in der GB-PS 1,081,767 die elektrophoretische Naß-in-Naßlackierung beschrieben. Die eingesetzten Harze, z. B. Styrol-Butadien-Copolymere, ermöglichten jedoch kein Lacksystem mit akzeptablen Eigenschaften. Es wurden Spannungen von maximal 100 V erreicht, somit waren keine brauchbaren Umgriffe zur Beschichtung von Hohlräumen möglich. Mit den heute verfügbaren kathodischen Lacksystemen sind die Voraussetzungen weitaus besser. Diese Systeme bieten auch generell die Möglichkeit zur kathodischen mehrschichtigen Naß-in-Naßlackierung. Bei einer Zweischichtlackierung, bestehend aus einer kathodisch applizierten Grundierung und einer kathodisch applizierten Decklackierung, reicht jedoch die erreichbare Oberflächengüte bei weitem nicht aus.

Es besteht daher der Wunsch nach einem Verfahren zur mehrschichtigen kathodischen Naß-in-Naßlackierung von metallischen Substraten, welches zu Überzügen mit guter Oberflächengüte führt.

Aus der nicht vorveröffentlichten DE-OS 34 32 233 ist ein Verfahren zum kataphoretischen Beschichten eines elektrisch leitenden Substrats, bei dem das elektrisch abscheidbare Überzugsmittel ein mindestens teilweise mit Säuren neutralisiertes, kationisches, Amino- und/oder Hydroxylgruppen enthaltendes Kunstharzbindemittel sowie eine Mischung von unterschiedlich reaktiven Vernetzungsmitteln enthält. Die Vernetzungsmittelmischung besteht aus aktivierten Estern und/oder mit unterschiedlichen Blockierungsmitteln blockierten Polyisocyanaten, wobei die Vernetzungsreaktionen beim Erhitzen bei Temperaturen, die um mindestens 10 °C auseinanderliegen, beginnen und wobei der zuerst reagierende Vernetzer in einem Anteil von 15 bis 60 Mol.-%, bezogen auf die Vernetzungsmittelmischung, vorliegt. Dieses Verfahren führt dazu, daß Untergrundfehler vermieden werden können, woraus eine bessere Oberflächenqualität des erhaltenen Films resultiert.

Die der vorliegenden Erfindung zugrunde liegende Aufgabe wurde durch das Verfahren der eingangs genannten Art gelöst, das dadurch gekennzeichnet ist, daß die Mischung der Vernetzungsmittel mindestens 2 unterschiedlich reaktive Vernetzer auf der Basis mit unterschiedlichen Alkoholen blockierter Polyisocyanate oder auf der Basis mit unterschiedlichen Aminen blockierter Polyisocyanate oder auf der Basis mit Aminen und Alkoholen blockierter Polyisocyanate oder auf der Basis aktivierter Ester oder auf der Basis aktivierter Ester und blockierter Polyisocyanate enthält, wobei unterschiedlich reaktiv bedeutet, daß die Vernetzungsreaktion beim Erhitzen bei Temperaturen, die um mindestens 10 °C auseinanderliegen, beginnt und wobei der zuerst reagierende Vernetzer in einem Anteil von 15 bis 60 Mol-%, bezogen auf die Vernetzungsmittelmischung, vorliegt mit der Maßgabe, daß diese erste Beschichtung gepült wird und vor dem Einbrennen eine weitere oder mehrere weitere kathodische Beschichtungen erfolgen und jeweils nach Spulen der Beschichtungen die Schichten gemeinsam gehärtet werden.

Methoden zur Messung des Starts der Vernetzungsreaktionen sind in DE-OS 34 32 233 eingehend beschrieben. Wie dort ebenfalls dargelegt, kann der Anstieg der Viskosität als Beginn der Vernetzungsreaktion definiert werden.

Als Bindemittel für die erste Beschichtung beim erfindungsgemäßen Verfahren eignen sich auf Grund des guten Korrosionsschutzes insbesondere Epoxidharze, wie sie zum Beispiel in den Patenten DE-PS 27 01 002 und DE-PS 31 08 073, der Patentanmeldung EP-A12 463 und DE-OS 34 32 233 beschrieben werden. Zur Einführung der solubilisierenden Gruppen werden die Bindemittelharze überweigend mit Aminen modifiziert. Besonders gut hat sich auch die Modifizierung mit Ketiminen bewährt. Auf diese Weise, neben anderen hier nicht näher zu beschreibenden Methoden, können nach dem Dispergieren des Harzes in Wasser freie primäre Aminogruppen im Harz realisiert werden. Aufgrund der Synthese enthalten die Epoxidharze desweiteren freie Hydroxylgruppen. Somit stehen in den Bindemitteln Hydroxyl- und häufig auch Aminogruppen zur Vernetzung mit dem zugemischten Fremdvernetzer zur Verfügung. Die im Bindemittel vorkommenden Vernetzer sind gegenüber Amino- und Hydroxylgruppen reaktiv.

Als Vernetzermischung eignen sich z. B. blockierte Polyisocyanate, wie sie in der DE-AS 20 57 799 und in der DE-OS 3 432 233 eingehend beschrieben werden. Bei dem erfindungsgemäßen Verfahren werden als Blockierungsmittel für Polyisocyanate Alkohole und/oder Amine eingesetzt. Durch die Umsetzung der Polyisocyanate mit den Blockierungsmitteln entstehen Urethan- bzw. Harnstoffgruppen, die unter den Einbrennbedingungen das Blockierungsmittel wieder abgeben und mit reaktiven Gruppen im Bindemittel unter Vernetzung reagieren können. Eine weitere Gruppe reaktiver Vernetzer umfaßt die Gruppe Vernetzer, die durch Umesterung oder Amidierung die Vernetzung bewirken. Die reaktive Estergruppe kann hierfür im Säure- oder im Alkoholteil aktiviert werden. Die im Alkoholteil aktivierten Ester sind z. B. β-Hydroxyalkylester, β,γ-Dihydroxyalkylester, β-Alkoxyalkylester und/oder Carbalkoxymethylester. Die Vernetzermischung kann aus blockierten Polyisocyanaten und aus Vernetzern mit aktivierten Estergruppen bestehen.

Bei dem Einbrennvorgang reagieren die Vernetzer aufgrund ihrer unterschiedlichen Reaktivität abgestuft, d. h. zeitlich versetzt und bei unterschiedlichen Einbrenntemperaturen. Die Temperaturen, bei denen die Vernetzungsreaktion der unterschiedlich reaktiven Vernetzer beginnt, liegen um mindestens 10 °C auseinander. Durch den zuerst reagierenden Vernetzer der ersten Beschichtung wird ein guter Verlauf fixiert, bevor es zum Schrumpf des Gesamtsystems über den Rauhigkeiten des metallischen Substrats kommen könnte. Der danach wirksam werdende Vernetzer führt zur endgültigen Vernetzung der ersten Beschichtung.

Als Bindemittel der als zweite Beschichtung applizierten Schicht eignen sich Acrylatharze, wie sie zum Beispiel in der DE-OS 30 17 603 und den US-PS 4,304,703 und US-PS 3,953,391 beschrieben sind. In der letzteren werden beispielsweise carboxylgruppenhaltige, mit Alkyleniminen modifizierte Acrylatharze als Bindemittel für einen kathodisch applizierbaren Überzug eingesetzt. Gemäß der DE-OS 30 17 603 werden Lackbindemittel auf Basis eines tertiäre Aminogruppen, verkappte Isocyanatgruppen, Hydroxyl- und Ethergruppen enthaltenden Copolymerisats für die kathodische Elektrotauchlackierung metallischer Substrate verwendet. Acrylatharze sind bevorzugt, da die auf die erste Beschichtung aufgetragenen Beschichtungen vorwiegend dekorative Aufgaben erfüllen sollen und direkt der Bewitterung und der Lichteinwirkung ausgesetzt sind. Desweiteren ist es möglich, daß die auf die erste Beschichtung applizierten Schichten die gleichen Bindemittel enthalten wie die erste Beschichtung, also Vernetzungsmittelmischungen enthaltende fremdvernetzende Bindemittel.

Die erste und die darauf applizierten weiteren Beschichtungen können sich in ihrer Pigmentierung unterscheiden.

Auf die erste kathodische Beschichtung kann auch naß-in-naß ein kathodisch abscheidbarer, Metallpulver enthaltender Überzug, wie er zum Beispiel in der europäischen Patentschrift Nr. 33 465 beschrieben ist, kathodischen appliziert werden. Gemäß der EP 33 465 wird eine Metallpulver enthaltende Kunstharzschicht durch kataphoretische Abscheidung von Metallpulver gemeinsam mit einem kationischen Filmbildner aus einem das Metallpulver und den Filmbildner in protonisierter Form enthaltenden wäßrigen Elektrotauchlack hergestellt. Der Filmbildner besteht beispielsweise aus einem Additionsprodukt eines primären oder sekundären Amins mit einem epoxidgruppenhaltigen Harz.

Auf die kathodisch applizierten Beschichtungen kann nach dem Einbrennen noch eine nicht mittels des Elektrotauchlackierverfahrens applizierte Schlußbeschichtung aufgebracht werden. Diese Beschichtung kann aus organischer oder aus wäßriger Lösung erfolgen. Diese Schlußbeschichtung kann sowohl ein Klarlack als auch ein pigmentierter Lack sein.

Desweiteren kommen als Schlußbeschichtung Lacke in Frage, bei denen die Filmbildung aus Pulvern erfolgt. Als Bindemittel für Beschichtungspulver eignen sich thermoplastische und thermohärtende höher- bis hochmolekulare Stoffe, beispielsweise aus der Stoffklasse der Epoxide, Polyester, Polyacrylate, Polyurethane, Polyamide sowie Celluloseacetobutyrat und Polypropylen. Beschichtungsmaterialien auf Epoxidbasis sind hinsichtlich ihrer Formulierungsmöglichkeiten besonders vielseitig. Die Applikation des Pulvers erfolgt durch elektrostatisches Sprühen oder durch Wirbelsintern.

Die Schlußbeschichtung kann auch durch Aufbringen eines Überzugsmittels mit einem Feststoffgehalt von mehr als 50 Gew.-% erhalten werden.

Im folgenden wird die Erfindung anhand von Beispielen näher erläutert. Alle Angaben über Teile und Prozentsätze sind Gewichtsangaben, falls nicht ausdrücklich etwas anderes festgestellt wird.

a) Herstellung der Vernetzer

Darstellung des Vernetzers I

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet ist, wird mit 12 280 Teilen Toluylendiisocyanat (Mischung aus etwa 80 % 2,4-Toluylendiisocyanat und etwa 20 % 2,6-Toluylendiisocyanat) beschickt. Es wird Stickstoff eingeleitet, und der Kühler wird eingeschaltet. Im Verlauf von 5 Stunden werden 5 550,5 Teile 2-Ethylhexanol allmählich zugegeben, wobei die Temperatur allmählich auf 50 °C steigt. Während die Temperatur von 50 °C aufrechterhalten wird, werden weitere 3 649,5 Teile 2-Ethylhexanol im Verlauf von 4 Stunden zugegeben. Die Reaktionsmischung wird 75 Minuten bei 50 °C gehalten, dann wird der Kühler abgeschaltet, und es werden 3,6 Teile Dibutylzinndilaurat zugegeben. Die Heizvorrichtung wird angeschaltet, und die Reaktionsmischung wird im Verlauf von 45 Minuten auf 65,6 °C erwärmt. Im Verlauf von 2 Stunden und 50 Minuten werden 3 184 Teile 1,1,1-Trimethylolpropan zugegeben, wobei die Temperatur von 65,6 auf 120 °C steigt. Die Reaktionsmischung wird bei dieser Temperatur 90 Minuten lang gehalten, dann werden 10 560 Teile 2-Ethoxyethanol zugegeben. Das entstandene Produkt ist eine Lösung eines Polyurethanvernetzungsmittels. Die Mindesteinbrenntemperatur dieses Vernetzungsmittels beträgt 165 °C.

Darstellung des Vernetzers II

2 340 g Glycidylester der 2-Methyl-2-ethylheptansäure werden mit 2 073 g Trimellithsäureanhydrid in einem Reaktionsgefäß auf 130 °C erhitzt. Hierbei springt die stark exotherme Reaktion an. Durch externe Kühlung wird die Reaktion auf 150 °C gehalten, bis eine Säurezahl von 183 erreicht ist. Dann kühlt man auf 90 °C ab und setzt 1 450 g Methylisobutylketon zu. Anschließend tropft man 835 g Propylenoxid langsam zu. Bei einer Säurezahl von 2 wird die Reaktion abgebrochen. Der Festkörper der Harzlösung wird mit weiterem Methylisobutylketon auf 70 % eingestellt. Die Mindesteinbrenntemperatur dieses Vernetzers beträgt 180 °C.

Darstellung des Vernetzers III

2 599 Teile einer 75 %igen Lösung eines trimerisierten Hexamethylendiisocyanats in Ethylglykolacetat-Xylol werden unter Stickstoff in einem geeigneten Reaktor vorgelegt.
Im Laufe von 6 Stunden werden nun 1 290 Teile Dibutylamin zugetropft. Man hält die Temperatur dabei unter 45 °C. Dann kühlt man auf Raumtemperatur ab und filtriert die Vernetzerlösung. Die Mindesteinbrenntemperatur dieses Vernetzers beträgt 140 °C.

Darstellung des Vernetzers IV

In einem geeigneten Reaktor werden 2 123 Teile eines polyfunktionellen aliphatischen Isocyanats auf Basis Hexamethylendiisocyanat unter Stickstoff vorgelegt. Hierzu läßt man 1 076 Teile Methylethylketoxim während 5 Stunden zulaufen und hält die Temperatur dabei unter 70 °C. Danach erwärmt man noch kurze Zeit auf 100 °C, um die Reaktion zu vervollständigen, setzt 800 Teile Ethylglykol zu, mischt unter und kühlt die Vernetzerlösung auf Raumtemperatur ab.

b) Herstellung der Bindemittel

Darstellung des Bindemittels I

Das Bindemittel wird analog dem Beispiel A der EP-A 70 550 hergestellt.
In einem geeigneten Reaktor werden 1 019 Teile eines handelsüblichen Epoxidharzes auf Basis Bisphenol A (Epoxidäquivalentgewicht 485), 39 Teile Xylol und 265 Teile eines Polycaprolactonpolyols mit einem mittleren Molekulargewicht von 540 vorgelegt. Die Mischung wird unter Rückfluß erhitzt und 30 Minuten lang bei dieser Temperatur gehalten. Danach kühlt man auf 140 °C ab und setzt 3,85 Teile Dimethylbenzylamin zu. Die Reaktionsmischung wird dann 2,5 Stunden bei 130 °C gehalten. Dann fügt man 802 Teile des Vernetzers I zu. Die Reaktionsmischung wird dadurch auf 110 °C gekühlt, und man gibt 64 Teile Methylethanolamin und 40 Teile einer 70 %igen Lösung von Methylisobutyldiketimin des Diethylentriamins zu. Das Diketimin erhält man aus einem Mol Diethylentriamin und 2 Molen Methylisobutylketon. Die Herstellung ist in der Patentschrift US 3,523,925 beschrieben. Die Reaktionsmischung wird nun 1 Stunde auf 115 °C gehalten. Danach verdünnt man mit 104 Teilen Hexylglykol und hält die Reaktionsmischung eine weitere Stunde auf 115 °C. Dann kühlt man auf 100 °C ab und gibt 201 Teile des Vernetzers II und 15 Teile Bleioctoat zu und mischt 15 Minuten unter. Danach werden 2 350 Teile des Ansatzes in einem anderen Reaktor mit 3 015 Teilen entionisiertem Wasser, 24,7 Teilen Eisessig und 48,3 Teilen einer Emulgatorlösung dispergiert.

Darstellung des Bindemittels II

In einem geeigneten Reaktor werden 1 024 Teile eines handelsüblichen Epoxidharzes auf der Basis Bisphenol A (Epoxidäquivalentgewicht 188), 142 Teile Neopentylglykol und 40 Teile Xylol vorgelegt und auf 120 °C erhitzt. Man fügt 4,1 Teile Dimethylbenzylamin zu und läßt die Temperatur auf 130 °C ansteigen. Man hält diese Temperatur, bis ein Epoxidäquivalentgewicht von 425 erreicht ist und gibt dann 366 Teile des oben bereits erwähnten Polycaprolactonpolyols und 3,1 Teile Dimethylbenzylamin zu. Man hält die Temperatur bei 130 °C, bis das Epoxidäquivalentgewicht von 1 085 erreicht ist. Dann mischt man 971 Teile des Vernetzers I unter. Man gibt 107 Teile des oben erwähnten Ketimins und 80 Teile Methylethanolamin zu. Dadurch steigt die Temperatur wieder an. Man hält sie für eine Stunde bei 115 °C und fügt 76 Teile Phenoxypropanol und 38 Teile Ethylglykol zu und mischt 15 Minuten unter. Vor dem Dispergieren werden 2 290 Teile der Harzlösung mit 210 Teilen des Vernetzers III gemischt. Diese Mischung wird danach in 3 439 Teilen entionisiertem Wasser, 39 Teilen Eisessig und 23 Teilen Emulgatorlösung dispergiert.

Darstellung des Bindemittels III

In einem geeigneten Reaktor werden 992 Teile eines Epoxidharzes auf Basis Bisphenol A mit einem Epoxidäquivalentgewicht von 495 und 1 814 Teile eines Epoxidharzes auf Basis Bisphenol A mit einem Epoxidäquivalentgewicht von 910 mit 864 Teilen Methylisobutylketon vorgelegt und erhitzt. Bei 117 °C wird Vakuum angelegt und Wasser ausgekreist. Danach kühlt man auf 70 °C ab und tropft 210 Teile Diethanolamin zu. Hierbei steigt die Temperatur auf 80 °C an. Man hält die Temperatur für 6 Stunden und gibt dann 630 Teile eines Umsetzungsproduktes von einem Mol Hexamethylendiamin mit 2 Molen des Glycidylesters der 2-Methyl-2-ethylheptansäure zu. Hierzu erwärmt man den Ansatz auf 120 °C und führt die Reaktion während 7 Stunden weiter. Danach mischt man 141 Teile Hexylglykol und 446 Teile Xylol unter. 1 854 Teile dieser Harzlösung werden mit 452 Teilen des Vernetzers II, 194 Teilen des Vernetzers III und 60 Teilen Bleioctoat versetzt und anschließend in 3 220 Teilen entionisiertem Wasser und 35 Teilen Eisessig dispergiert.

Darstellung des Bindemittels IV

In einem geeigneten Reaktor wird folgende Mischung unter Stickstoff vorgelegt : 260 Teile Phenylglykol, 15 Teile Wasser, 4 Teile t-Butylperoctoat, 40 Teile Methylmethacrylat, 37 Teile Butylacrylat, 40 Teile Styrol, 27 Teile Hydroxyethylmethacrylat und 7 Teile Dodecylmercaptan. Diese Mischung wird auf 105 °C erhitzt, dann läßt man aus separaten Zulaufgefäßen folgende 2 Mischungen zulaufen :
Mischung 1 : 210 Teile Phenylglykol und 40 Teile t-Butylperoctoat ;
Mischung 2 : 350 Teile Methylmethacrylat, 330 Teile Butylacrylat, 350 Teile Styrol, 240 Teile Hydroxyethylmethacrylat und 65 Teile Dodecylmercaptan.

Während des Zulaufes erhöht man die Temperatur langsam auf 130 °C. Nach Beendigung des Zulaufs hält man eine Stunde diese Temperatur und gibt dann während einer Zeitdauer von 90 Minuten nochmals 25 Teile Phenylglykol und 1 Teil t-Butylperoctoat zu. Jetzt werden schnell 60 Teile entionisiertes Wasser zugesetzt, die man mit Restmonomeren in der nächsten Stunde wieder abzieht. Dann kühlt man auf 100 °C ab und gibt 100 Teile N-Methylethanolamin zu. Dadurch steigt die Temperatur auf 110 °C. Eine Stunde lang wird diese Temperatur gehalten, dann setzt man 250 Teile des Vernetzers IV zu und mischt 30 Minuten unter. Danach wird die Harzlösung in 80 Teilen Eisessig und 4 000 Teilen entionisiertem Wasser dispergiert.

Darstellung des Bindemittels V

In einem geeigneten Reaktor wird folgende Mischung unter Schutzgas vorgelegt und auf 120 °C erhitzt : 60 Teile N-Methylpyrrolidon, 6 Teile entionisiertes Wasser, 1,5 Teile t-Butylperoctoat, 14 Teile Butylacrylat, 14 Teile Styrol, 4 Teile Hydroxyethylmethacrylat, 1 Teil Methylmethacrylat, 6 Teile Glycidylmethacrylat und 2,5 Teile Dodecylmercaptan. Sobald die Temperatur von 120 °C erreicht ist, beginnt man mit dem separaten Zulauf von 15 Teilen t-Butylperoctoat in 30 Teilen N-Methylpyrrolidon und folgender Monomerenmischung : 140 Teile Butylacrylat, 140 Teile Styrol, 40 Teile Hydroxyethylmethacrylat, 10 Teile Methylmethacrylat, 60 Teile Glycidylmethacrylat und 25 Teile Dodecylmercaptan. Während des Zulaufs erhöht man die Temperatur langsam auf 125 °C. Insgesamt hält man 2 Stunden diese Temperatur und fügt während einer weiteren Stunde 1 Teil t-Butylperoctoat in 20 Teilen N-Methylpyrrolidon zu. Danach werden schnell 20 Teile entionisiertes Wasser zugegeben, die man destillativ wieder entfernt, um die Restmonomeren zu beseitigen. Hierzu erhitzt man auf 130 °C. Wenn das gesamte Wasser abgetrennt ist, kühlt man auf 90 °C ab und gibt 30 Teile N-Methylethanolamin zu. Durch die exotherme Reaktion steigt die Temperatur wieder an, und man hält sie dann eine Stunde bei 115 °C. Dann kühlt man auf 90 °C ab und gibt 40 Teile 90 %ige Milchsäure zu. Durch Zugabe von N-Methylpyrrolidon stellt man einen Festkörper von 60 % ein.

Darstellung des Bindemittels VI

In einem für die Acrylatpolymerisation geeigneten Reaktor werden 1 350 Teile Xylol vorgelegt und auf 130 °C erhitzt. Sobald die Temperatur erreicht ist, gibt man während 3,5 Stunden ein Monomerengemisch aus 1 250 Teilen n-Butylmethacrylat, 360 Teilen 2-Hydroxyethylmethacrylat, 410 Teilen 2-Ethylhexylmethacrylat, 60 Teilen Methacrylsäure und 45 Teilen α,α'-Azobisisobutyronitril zu. Dann hält man noch 30 Minuten bei 130 °C. Anschließend fügt man portionsweise während 2 Stunden bei 130 °C 200 Teile Xylol und 20 Teile α,α'-Azobisisobutyronitril zu. Anschließend polymerisiert man noch bei dieser Temperatur 2 Stunden nach und fügt dann weitere 60 Teile Xylol und 300 Teile n-Butanol zu.

c) Darstellung einer grauen Pigmentpaste

Zu 953 Teilen eines handelsüblichen Epoxidharzes auf Basis Bisphenol A mit einem Epoxidäquiva-

EP 0 243 357 B1

lentgewicht von 8 % werden 800 Teile Butylglykol gegeben. Die Mischung wird auf 80 °C erhitzt. In diese Harzlösung werden dann 221 Teilen eines Umsetzungsproduktes von 101 Teilen Diethanolamin und 120 Teilen 80 %iger wässriger Milchsäure gegeben. Man führt die Reaktion bei 80 °C durch, bis die Säurezahl unter 1 gefallen ist.

1 800 Teile dieses Produkts werden mit 2 447 Teilen entionisiertem Wasser vorgelegt und mit 2 460 Teilen Titandioxid, 590 Teilen eines Extenders auf Basis Aluminiumsilikat, 135 Teilen Bleisilikat und 37 Teilen Ruß vermengt. Diese Mischung wird in einem Mahlaggregat auf eine Hegman-Feinheit von 5-7 zerkleinert. Danach gibt man 1 255 Teile entionisiertes Wasser zu, um die gewünschte Pastenkonsistenz zu erreichen. Diese graue Paste ist sehr lagerstabil.

d) Darstellung einer grünen Pigmentpaste

180 Teile des Bindemittels V werden mit 360 Teilen Wasser und 18 Teilen eines Entschäumers gut vermischt. Hierzu gibt man 30 Teile eines Grünpigments auf der Basis eines polychlorierten Phthalocyanin-Kupfer-Komplexes, 150 Teile Permanentgelb (Colour-Index Nr. 11 783), 25 Teile Titandioxid und 500 Teile Chromoxidgrün (Colour-Index Nr. 77288). Diese Mischung wird in einem Mahlaggregat bis zur gewünschten Feinheit gemahlen.

e) Zubereitung der Elektrotauchbäder

1. Bäder für die erste Beschichtung (Grundierung)

Jeweils 2 000 Teile der oben beschriebenen Bindemittel I, II und III werden mit 775 Teilen der grauen Pigmentpaste vermischt. Der Badfestkörper wird mit entionisiertem Wasser auf 20 % (150 °C, 30′) eingestellt. Man läßt die Bäder 3 Tage unter Rühren altern. Entsprechend dem eingesetzten Bindemittel werden die Bäder als Bad I, Bad II und Bad III bezeichnet.

2. Bäder für die weiteren Beschichtungen

Bad IV

1 500 Teile entionisiertes Wasser werden mit 2 000 Teilen des Bindemittels IV und 70 Teilen der grünen Paste vermischt. Mit weiterem Wasser wird dann ein Badfestkörper von 15 % (150 °C, 30′) eingestellt. Vor der ersten Applikation läßt man das Bad 3 Tage unter Rühren altern.

Bad V

Mit dem Bindemittel IV wird ein Bad für einen Klarlack dadurch hergestellt, daß man die Bindemitteldispersion mit entionisiertem Wasser auf einen Festkörper von 22 % (150 °C, 30′) verdünnt. Vor der ersten Applikation soll das Bad mindestens einen Tag unter Rühren altern.

Bad VI

Zunächst werden 150 Teile einer 60 %igen Aluminiumpaste in 200 Teilen des Bindemittels V angerieben. Hierzu gibt man 20 Teile einer Katalysatorpaste. Diese Paste wird aus 33 Teilen Dibutylzinnoxid, 24 Teilen des Bindemittels V und 43 Teilen entionisiertem Wasser hergestellt. Das Bad wird weiter angesetzt mit 2 500 Teilen des Bindemittels IV und mit entionisiertem Wasser auf 5 000 Teile aufgefüllt.

f) Abscheidung der Bäder

Die Abscheidung der Lackfilme erfolgt auf zinkphosphatierten Blechen. Es werden jeweils 5 Bleche unter den beschriebenen Bedingungen mit den grauen Grundierungen (Bäder I, II und III) beschichtet. Die Badtemperatur liegt jeweils bei 27 °C, und die Abscheidedauer beträgt 2 Minuten. Jeweils eines der beschichteten Bleche wird separat bei 180 °C 15 Minuten lang eingebrannt.

|  | Bsp. 1 | Bsp. 2 | Bsp. 3 |
|---|---|---|---|
|  | (Bad I) | (Bad II) | (Bad III) |
| Applikationsspannung | 360 V | 315 V | 320 V |
| Schichtdicke | 18 /um | 34 /um | 21 /um |

Die nicht eingebrannten Bleche werden mit Wasser gespült und 10 Minuten lang abgelüftet. Dann werden die Bleche im Bad IV einer zweiten kathodischen Beschichtung unterzogen. Die Applikationsdauer beträgt 3 Minuten, die Badtemperatur liegt bei 30 °C. Die Abscheidespannung beträgt 340 V. Die Bleche werden anschließend mit Wasser gespült und trockengeblasen. Jeweils eines der Bleche wird bei 180 °C während 20 Minuten eingebrannt.

| | Bsp. 4 | Bsp. 5 | Bsp. 6 |
|---|---|---|---|
| | (Bad I + IV) | (Bad II + Bad IV) | Bad III + Bad IV) |
| Schichtdicke | 53 /um | 74 /um | 61 /um |
| Verlauf * | 1 | 0,5 | 1 |
| DOI ** | 85 | 93 | 78 |

*: 0 = bester Wert ; 5 = schlechtester Wert
**: DOI = distinctness of reflected image

Die grundierten Bleche werden zu dieser Messung mit 50 $\mu$m eines Acrylatdecklackes beschichtet. Der DOI-Wert wird in einer Relationsmessung ermittelt und ist ein Maß für das Glanzverhalten einer fast ideal spiegelnd reflektierenden Fläche. Bei der Messung wird der Meßwert im Reflexionsmaximum, das heißt der Einfallswinkel eines Lichtstrahls ist gleich dem Ausfallwinkel, in das Verhältnis gesetzt zu dem Meßwert, den man erhält, wenn die Winkel um 0,3° differieren.

Die nicht eingebrannten, zweifach kathodisch beschichteten Bleche werden nach dem Abspülen 10 Minuten abgelüftet und anschließend im Bad V einer dritten kathodischen Beschichtung unterzogen. Die Badtemperatur liegt bei 30 °C, die Beschichtung erfolgt mit 340 V 2 Minuten lang. Jeweils eines der Bleche wird mit Wasser gespült, trockengeblasen und bei 180 °C 20 Minuten lang eingebrannt.

| | Bsp. 7 | Bsp. 8 | Bsp. 9 |
|---|---|---|---|
| | (Bäder I + IV + V) | (Bäder II + IV + V) | (Bäder III + IV + V) |
| Schichtdicke | 71 /um | 95 /um | 80 /um |
| Verlauf * | 0,5 | 0 | 0,5 |
| DOI ** | 89 | 95 | 83 |

*: 0 bester Wert ; 5 schlechtester Wert
**: DOI = distinctness of reflected image

Die einfach kathodisch beschichteten Bleche aus den Versuchen 1, 2 und 3 werden im Bad VI mit dem Silbermetalliclack kathodisch beschichtet. Die Applikationsdauer beträgt 3 Minuten bei einer Badtemperatur von 27 °C. Die Abscheidespannung liegt bei 280 V. Die Bleche werden nach der Beschichtung mit Wasser gespült und trockengeblasen. Anschließend werden die Bleche bei 180 °C 20 Minuten eingebrannt.

| | Bsp. 10 | Bsp. 11 | Bsp. 12 |
|---|---|---|---|
| | (Bäder I + VI) | (Bäder II + VI) | (Bäder III + VI) |
| Schichtdicke | 57 /um | 78 /um | 64 /um |

Die Bleche aus den Beispielen 4, 5, 6, 10, 11 und 12 werden mit einem im folgenden beschriebenen Klarlack überspritzt.

Herstellung eines organisch gelösten Klarlackes :
Der Klarlack wird aus folgenden Bestandteilen hergestellt :
1 805 Teile des Bindemittels VI, 693 Teile einer 55 %-igen Lösung eines Melaminharzes in Isobutanol, 2 Teile Silikonöl*.

* Silikonöl, mit Xylol auf 1 Gewichtsprozent verdünnt.

7

Der Ansatz wird mit Xylol auf eine Viskosität von 30 Sekunden (Ford-Becher 4/20 ºC) verdünnt.

Die vorbehandelten Bleche werden dann mit dem Klarlack gespritzt, um einen Klarlackfilm von etwa 35 µm Trockenfilmdicke zu erreichen. Der Decklack wird 30 Minuten lang bei 130 ºC eingebrannt.

Ergebnis der Beschichtungen mit dem Klarlack als Deckbeschichtung :

Die Beispiele 13-18 beziehen sich in dieser Reihenfolge auf die mit dem Klarlack überzogenen Bleche aus den Beispielen 4, 5, 6, 10, 11 und 12.

|  | Bsp. 13 | Bsp. 14 | Bsp. 15 |
|---|---|---|---|
| Gesamtschichtdicke (µm) | 91 | 112 | 97 |
| Bleistifthärte [1] | 2H | H | H |
| Erichsentiefung (mm) [2] | 3,8 | 5,1 | 4,3 |
| DOI [3] | 89 | 94 | 91 |

|  | Bsp. 16 | Bsp. 17 | Bsp. 18 |
|---|---|---|---|
| Gesamtschichtdicke (µm) | 89 | 115 | 98 |
| Bleistifthärte [1] | 2H | H | H |
| Erichsentiefung (mm) [2] | 4,3 | 5,6 | 4,5 |
| DOI [3] | 87 | 95 | 93 |

[1] Die Filme werden mit Bleistiften verschiedener Härte bei 20 ºC und 75 % relativer Luftfeuchtigkeit gekratzt. Die maximale Bleistifthärte, die den Film nicht beschädigt, wird bestimmt.

[2] Tiefung nach Erichsen gemäß DIN 53 156

[3] Distinctness of reflected image

**Patentansprüche**

1. Verfahren zum Beschichten eines elektrisch leitenden Substrats, bei dem das Substrat in ein wäßriges Bad auf der Basis eines mindestens teilweise mit· Säuren neutralisierten, kationischen, Amino- und/oder Hydroxylgruppen enthaltenden Kunstharzbindemittels, das eine Mischung von Vernetzungsmitteln sowie Pigmente, Füllstoffe, Korrosionsinhibitoren, Lackhilfsmittel, ggf. Katalysatoren und in einer Menge bis zu 15 Gew.-%, bezogen auf das Gesamtgewicht des Überzugsmittels, organische Lösungsmittel enthält, eintaucht und als Kathode geschaltet wird, mittels Gleichstrom ein Film auf dem Substrat abgeschieden wird, das Substrat aus dem Bad entfernt wird und der Film durch Einbrennen gehärtet wird, dadurch gekennzeichnet, daß die Mischung der Vernetzungsmittel mindestens 2 unterschiedlich reaktive Vernetzer auf der Basis mit unterschiedlichen Alkoholen blockierter Polyisocyanate oder auf der Basis mit unterschiedlichen Aminen blockierter Polyisocyanate oder auf der Basis mit Aminen und Alkoholen blockierter Polyisocyanate oder auf der Basis aktivierter Ester oder auf der Basis aktivierter Ester und blockierter Polyisocyanate enthält, wobei unterschiedlich reaktiv bedeutet, daß die Vernetzungsreaktion beim Erhitzen bei Temperaturen, die um mindestens 10 ºC auseinanderliegen, beginnt und wobei der zuerst reagierende Vernetzer in einem Anteil von 15 bis 50 Mol.-%, bezogen auf die Vernetzungsmittelmischung, vorliegt mit der Maßgabe, daß diese erste Beschichtung gespült wird und vor dem Einbrennen eine weitere oder mehrere weitere kathodische Beschichtungen erfolgen und jeweils nach Spülen der Beschichtungen die Schichten gemeinsam gehärtet werden.

2. Verfahren nach Anspruch 1, dadurch gekennzeichnet, daß die aktivierten Ester β-Hydroxyalkylester, β,γ-Dihydroxyalkylester, β-Alkoxyalkylester und/oder Carbalkoxymethylester sind.

3. Verfahren nach Anspruch 1, dadurch gekennzeichnet, daß die aktivierten Ester eine Aktivierung im Säureteil aufweisen.

4. Verfahren nach Anspruch 1 bis 3, dadurch gekennzeichnet, daß auf die erste Beschichtung ein als Bindemittel Acrylatharze enthaltendes Überzugsmittel kathodisch appliziert wird.

5. Verfahren nach Anspruch 1 bis 3, dadurch gekennzeichnet, daß auf die erste Beschichtung ein kathodisch abscheidbares, Metallpulver enthaltendes Überzugsmittel aufgebracht wird.

6. Verfahren nach Anspruch 1 bis 5, dadurch gekennzeichnet, daß über der mehrschichtigen Naß-in-naß-Lackierung nach dem Einbrennen eine nicht mittels des Elektrotauchlackierverfahrens applizierte Schlußbeschichtung aufgebracht wird.

7. Verfahren nach Anspruch 6, dadurch gekennzeichnet, daß die Schlußbeschichtung aus organischer oder wäßriger Lösung erfolgt.

8. Verfahren nach Anspruch 6, dadurch gekennzeichnet, daß die Schlußbeschichtung ein Pulverlack ist.

9. Verfahren nach Anspruch 6, dadurch gekennzeichnet, daß die Schlußbeschichtung ein Überzugsmittel mit einem Festkörpergehalt von mehr als 50 Gew.-% ist.

## Claims

1. Process for coating an electrically conductive substrate, in which the substrate is immersed in an aqueous bath based on a cationic synthetic resin binder which is at least in part neutralized with acids and contains amino and/or hydroxyl groups, the said bath containing a mixture of crosslinking agents as well as pigments, fillers, corrosion inhibitors, paint auxiliary substances and, if appropriate, catalysts, as well as organic solvents in an amount of up to 15 % by weight based on the total weight of the coating, the said substrate being cathodically connected, in which, by the action of direct current, a film is deposited on the substrate, after which the substrate is removed from the bath and the film is cured by stoving, characterized in that the mixture of crosslinking agents comprises at least two crosslinking agents of different reactivities based on polyisocyanates blocked by different alcohols, or based on polyisocyanates blocked by different amines, or based on polyisocyanates blocked by amines and alcohols, or based on activated esters and blocked polyisocyanates, the expression « different reactivities » meaning that the crosslinking reaction commences by heating to temperatures which are separated by at least 10 °C and that crosslinking agent which is first to react is present in an amount from 15 to 60 mol. % based on the mixture of the crosslinking agents, with the proviso that this first coat is rinsed, one or more further cathodic coats are deposited before stoving and all the coats are cured together after each coat has been rinsed.

2. Process according to claim 1, characterized in that the activated esters are β-hydroxyalkyl esters, β-γ-dihydroxyalkyl esters, β-alkoxyalkyl esters and/or carbalkoxymethyl esters.

3. Process according to claim 1, characterized in that the activated esters exhibit an activation in the acid moiety.

4. Process according to claims 1 to 3, characterized in that a coating containing acrylate resins as binders is applied cathodically onto the first coat.

5. Process according to claims 1 to 3, characterized in that a coating containing a metal powder, which is capable of being cathodically deposited, is applied onto the first coat.

6. Process according to claims 1 to 5, characterized in that a top coat, not deposited by the electrocoating process, is applied over the multicoat wet-on-wet coats after stoving.

7. Process according to claim 6, characterized in that the topcoat is deposited from an organic or aqueous solution.

8. Process according to claim 6, characterized in that the topcoat is a powder paint.

9. Process according to claim 6, characterized in that the topcoat consists of a coating with a solids content greater than 50 % by weight.

## Revendications

1. Procédé de revêtement d'un substrat électriquement conducteur, suivant lequel on plonge le substrat dans un bain aqueux à base d'un liant en résine synthétique renfermant des groupes amino et/ou hydroxyle, cationique, au moins en partie neutralisé par des acides, qui renferme un mélange d'agents de réticulation, de même que des pigments, des charges, des inhibiteurs de corrosion, des adjuvants pour vernis, le cas échéant, des catalyseurs, et, en une quantité allant jusqu'à 15 % en poids, par rapport au poids total de l'agent de revêtement, des solvants organiques et on monte ledit substrat en cathode, on dépose un film sur le substrat à l'aide de courant continu, on retire le substrat du bain, et on fait durcir le film par cuisson, caractérisé par le fait que le mélange des agents de réticulation renferme au moins 2 agents de réticulation ayant des réactivités différentes, à base de polyisocyanates bloqués par des alcools différents, ou bien à base de polyisocyanates bloqués par des amines différentes, ou bien à base de polyisocyanates bloqués par des amines et des alcools, ou bien à base d'esters activés, ou bien à base d'esters activés et de polyisocyanates bloqués, l'expression, « ayant des réactivités différentes » signifiant que la réaction de réticulation commence lors du chauffage à des températures qui diffèrent l'une de l'autre d'au moins 10 °C, et l'agent de réticulation réagissant en premier étant présent dans une fraction allant de 15 à 60 % en moles, par rapport au mélange des agents de réticulation, avec la condition que l'on rince ce premier revêtement et qu'avant la cuisson, on effectue un autre ou plusieurs autres revêtements cathodiques et qu'après avoir rincé chacun des revêtements, on fasse durcir les couches conjointement.

2. Procédé selon la revendication 1, caractérisé par le fait que les esters activés sont les esters β-hydroxyalkyliques, les esters β, γ-dihydroxyalkyliques, les esters β-alcoxyalkyliques et/ou les esters carbalcoxyméthyliques.

3. Procédé selon la revendication 1, caractérisé par le fait que les esters activés présentent une activation dans la partie acide.

4. Procédé selon l'une des revendications 1 à 3, caractérisé par le fait que, sur le premier revêtement, on applique, par voie cathodique, un agent de revêtement renfermant des résines acryliques comme liants.

5. Procédé selon l'une des revendications 1 à 3, caractérisé par le fait que, sur le premier revêtement, on applique un agent de revêtement renfermant une poudre métallique, capable d'être déposée à la cathode.

6. Procédé selon l'une des revendications 1 à 5, caractérisé par le fait que, par laquage en plusieurs couches au mouillé-sur-mouillé, après la cuisson, on rapporte une couche de finition, laquelle n'est pas appliquée par procédé de laquage par électrodéposition.

7. Procédé selon la revendication 6, caractérisé par le fait que le revêtement de finition est réalisé à partir d'une solution organique ou aqueuse.

8. Procédé selon la revendication 6, caractérisé par le fait que le revêtement de finition est une laque en poudre.

9. Procédé selon la revendication 6, caractérisé par le fait que le revêtement de finition est un agent de revêtement présentant une teneur en corps solides de plus de 50 % en poids.